# EUROPÄISCHE PATENTSCHRIFT

(11) **EP 0 340 199 B1**
(45) Veröffentlichungstag und Bekanntmachung des Hinweises auf die Patenterteilung: **14.12.1994**
(21) Anmeldenummer: 89890021.2
(22) Anmeldetag: 25.01.1989
(51) Int. Cl.: C03B 33/02

(54) **Vorrichtung zum Brechen von einseitig geritzten Glastafeln**
Apparatus for braking glass panes scored at only one side
Appareil pour rompre des feuilles de verre rayées d'un seul côté

(30) Priorität: 25.04.1988 AT 1051/88
(43) Veröffentlichungstag der Anmeldung: 02.11.1989
(73) Patentinhaber: Lisec, Peter, 3363 Amstetten-Hausmening (AT)
(72) Erfinder: Lisec, Peter, 3363 Amstetten-Hausmening (AT)
(74) Vertreter: Beer, Manfred, Dipl.-Ing.

(56) Entgegenhaltungen:
- DE-A- 3 428 863
- FR-A- 2 070 212
- US-A- 3 372 847
- US-A- 4 196 830
- PATENT ABSTRACTS OF JAPAN, Band 7, Nr. 219 (C-188)[1364], 29. September 1983;& JP-A-58 115 035 (NIHON ITA GLASS K.K.) 08-07-1983

## Beschreibung

Die Erfindung betrifft eine Vorrichtung zum Brechen von einseitig geritzten Glastafeln, mit einer beispielsweise als Tisch ausgebildeten Auflagefläche für die geritzte Glastafel, mit einem Paar von oben gegen die Glastafel einwirkender Widerlager, die zueinander im wesentlichen parallel ausgerichtet sind, und mit einer von unten zwischen den Widerlagern gegen die Glastafel anlegbaren Hebeleiste oder -rolle.

Derartige Vorrichtungen, die auch Brechtische genannt werden, sind im Anschluß an Glasschneidetische vorgesehen, um die in Glasschneidetischen einseitig geritzten Glastafeln entlang der Ritzlinien auf die gewünschten Formate zu brechen. Der Brechvorgang auf den Brechtischen erfolgt dabei dadurch, daß aus der Auflagefläche von unten eine Leiste oder eine Rolle angehoben wird, während von oben gegen die Glastafel zwei zu beiden Seiten der Leiste oder Rolle angeordnete Widerlager anliegen. Während des Brechvorganges entsteht zwischen der Oberseite der Glastafel und den diese nach unten drückenden Widerlagern eine Relativbewegung, so daß die Oberfläche der Glastafeln zerkratzt und insbesondere dort allenfalls bestehende Beschichtungen zerstört werden können. Vergrößert wird die Gefahr des Zerkratzens von Glasscheiben bzw. des Beschädigens von Beschichtungen auf den Glastafeln dadurch, daß beim Brechvorgang ganz feine Glassplitter entstehen, die, wenn sie zwischen die Widerlager und die Glastafeln gelangen, während des Brechvorganges zu Kratzern in der Glastafel führen.

Eine Vorrichtung mit den Merkmalen des einleitenden Teils des unabhängigen Anspruches 1 ist aus der DE-A-34 28 863 bekannt.

Die FR-A-2 070 212 und die korrespondierende US-A-3 693 852 zeigen eine Vorrichtung zum Teilen von geritzten Glasplatten, bei der nur ein Widerlager vorgesehen ist. Bei der aus der FR-A-2 070 212 bekannten Vorrichtung ist eine Hebeleiste oder -rolle vorgesehen, die beim Brechen aus einer im Tisch versenkten Stellung angehoben wird. Bei der Vorrichtung gemäß der FR-A-2 070 212 ist das Widerlager ein einziger, hohler Balken, der an seiner der Glastafel zugekehrten Seite zwei Reihen von Austrittsöffnungen für Gas aufweist. Die unter diesem hohlen Balken vorgesehene Walze ist ständig höher als die Walzen der zu beiden Seiten dieser Walze vorgesehenen Auflageflächen. Die bekannte Vorrichtung ist zum Brechen eines kontinuierlich bewegten Glasbandes (Floatglas) entlang sich quer zur Längserstreckung (=Bewegungsrichtung) des Glasbandes erstreckender Ritzlinien geeignet. Die aus der FR-A 2 070 212 bekannte Vorrichtung arbeitet so, daß durch das austretende Gas das sich über die Walze bewegende Glasband gebogen wird, so daß es sich längs der in ihm vorher erzeugten Ritzlinien teilt.

Der Erfindung liegt die Aufgabe zugrunde, eine Vorrichtung der eingangs genannten Gattung anzugeben, mit der insbesondere einseitig mit einer Beschichtung versehene Glastafeln ohne Gefahr der Beschädigung der Glastafeln und insbesondere der Beschichtung gebrochen werden können.

Erfindungsgemäß wird dies dadurch erreicht, daß die Widerlager wie an sich bekannt hohl ausgebildet sind, an ihrer der Glastafel zugekehrten Unterseite Austrittsöffnungen für ein gasförmiges Medium auf weisen, und an wenigstens eine Quelle für das unter Druck gesetzte gasförmige Medium, insbesondere Luft, angeschlossen sind, daß die der Auflagefläche bzw. der Glastafel zugewandte Unterseite der Widerlager schräg ausgebildet ist, wobei die der Hebeleiste oder -rolle benachbarten unteren Kanten der Widerlager höher angeordnet sind als die anderen unteren Kanten derselben.

Bei dem erfindungsgemäßen Brechtisch liegen die Widerlager nicht an der Oberseite der Glastafel, die zu brechen ist, an sondern drücken diese durch ein zwischen ihnen und der Glastafel gebildetes Luftkissen nieder. Auf diese Art und Weise sind an der Oberfläche von Glastafeln bzw. dort allenfalls vorgesehenen Beschichtungen zerstörende Relativbewegungen zwischen den Widerlagern und den Glastafeln ausgeschlossen.

Ein weiterer Vorteil der erfindungsgemäßen Vorrichtung liegt darin, daß die Widerlager im Gegensatz zu auf der Glastafel anliegenden Widerlagern nicht genau auf die Dicke der zu brechenden Glastafel eingestellt werden müssen. Dies, weil sich die über die Luftkissen unter den erfindungsgemäßen Widerlagern auf die Glastafel ausgeübte Niederhaltekraft bei dickeren Glastafeln (kleinerer Abstand) größer und bei dünneren Glastafeln (größerer Abstand) kleiner ist. Somit wird ohne Verstellen der Widerlager in vertikaler Richtung selbsttätig die für das Brechen dünnerer Glastafeln benötigte kleinere Niederhaltekraft aufgebracht. Diese Niederhaltekraft erhöht sich bei dickeren Glastafeln ohne Verstellen der Widerlager, so daß dann die größere Niederhaltekraft entsteht, wie sie für das Brechen dickerer Glastafeln benötigt wird. So können beispielsweise Glastafeln mit einer Dicke zwischen 2 und 10 mm ohne vertikales Nachstellen der Widerlager gebrochen werden.

Dadurch, daß bei der Erfindung die der Auflagefläche bzw. der Glastafel zugewandte Unterseite der Widerlager schräg ausgebildet ist, wobei die der Hebeleiste oder -rolle benachbarten unteren Kanten der Widerlager höher angeordnet sind als die anderen unteren Kanten derselben, wird vermieden, daß auch bei knapp über der Glastafel angeordneten Widerlagern, die Glastafeln während des Brechvorganges unter der Wirkung der Hebeleiste oder -rolle an den einander zugekehrten Unterkanten der Widerlager anliegt.

Die Öffnungen in den Widerlagern können Runddüsen sein. Bevorzugt ist es aber, daß die Austrittsöffnungen für das gasförmige Medium als Schlitzdüsen oder als eine durchgehende Schlitzdüse ausgebildet sind. Es können nebeneinander mehrere, sich in Längsrichtung der Widerlager erstreckende Reihen von Schlitzdüsen bzw. mehrere nebeneinander angeordnete, durchgehende Schlitzdüsen vorgesehen sein. Auf diese Weise wird ein besonders kräftiges Luftpolster zwischen den Widerlagern und der Glastafel gebildet.

Weitere Einzelheiten und Merkmale der Erfindung ergeben sich aus der nachstehenden Beschreibung von Ausführungsformen, wobei auf die angeschlossene Zeichnung Bezug genommen wird. Es zeigt
Fig. 1 im Schnitt eine Vorrichtung zum Brechen von einseitig geritzten Glastafeln und
Fig. 2 einen im Anschluß an einen nicht gezeigten Glasschneidetisch angeordneten Brechtisch mit einer Stelle zum statischen und einer Stelle zum dynamischen Brechen von Glastafeln.

Eine lediglich in ihren wesentlichen Teilen gezeigte Vorrichtung zum Brechen von einseitig geritzten Glastafeln besitzt eine Auflagefläche 1, die beispielsweise als Tisch ausgebildet ist. Auf der Auflagefläche 1 wird eine Glastafel 2, die auf ihrer Oberseite eine Beschichtung, z.B. eine aufgedampfte Metallschicht 3, trägt, in Richtung des Pfeiles 4 herangefördert. Die Glastafel 2 wird so lange in Richtung des Pfeiles 4 bewegt, bis eine an ihrer Oberseite vorgesehene Ritzung 5 genau über einer in einem Schlitz 6 der Auflagefläche 1 angeordneten Hebeleiste 7 angeordnet ist. Die Hebeleiste 7 ist in Richtung des Doppelpfeiles 8 heb- und senkbar.

Oberhalb der Auflagefläche 1 sind zu beiden Seiten der Hebeleiste 7 Widerlager 9 und 10 vorgesehen, deren Abstand voneinander in Richtung der Doppelpfeile 11 veränderbar ist, wobei die Widerlager 9 und 10 auch bei einer Veränderung ihres Abstandes voneinander zur Hebeleiste 7 symmetrisch ausgerichtet bleiben.

Zur allfälligen Anpassung an verschiedene Stärken der Glastafeln 2 und gegebenenfalls auch zur Unterstützung des Brechvorganges sind die Widerlager 9 und 10 in Richtung des Doppelpfeiles 12 gegenüber der Auflagefläche 1 heb- und senkbar.

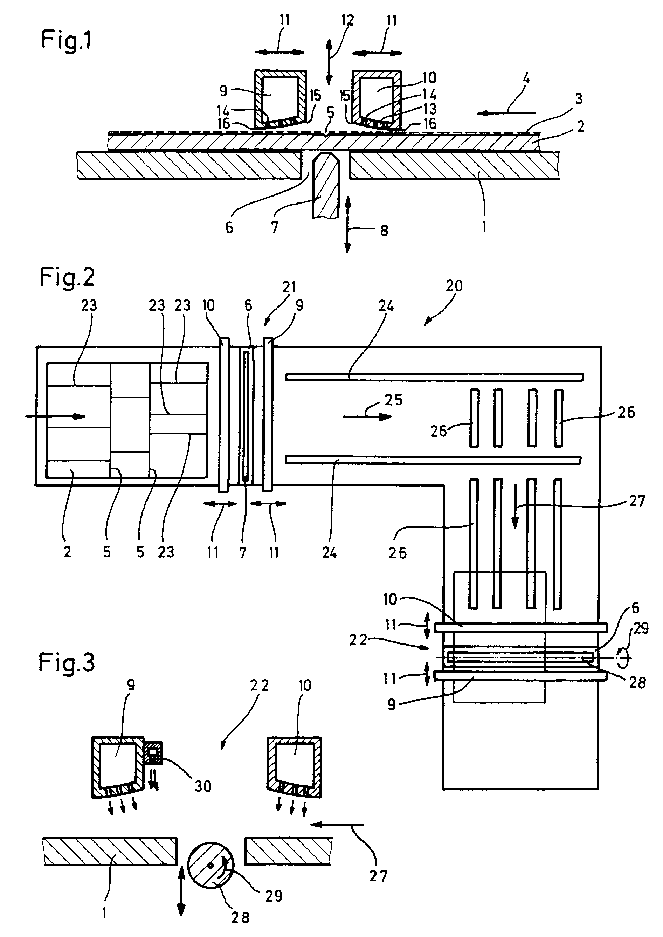

Wie in Fig. 1 gezeigt, sind die Widerlager 9 und 10 hohl ausgebildet und besitzen an ihrer, der Glastafel 2 zugekehrten Seite (Wand 13) mehrere Luftaustrittsöffnungen 14.

Die Luftaustrittsöffnungen 14 sind im gezeigten Ausführungsbeispiel als Runddüsen ausgebildet, wobei drei Reihen von Runddüsen 14 vorgesehen sind, die sich in Längsrichtung der Widerlager 9 bzw. 10 erstrecken.

An die Enden der Widerlager 9 und 10 sind Leitungen zum Zuführen von unter Druck stehendem Gas, insbesondere Luft angeschlossen, wobei die zugeführte Druckluft dann über die Düsen 14 aus den Widerlagern 9 und 10 ausströmt, so daß die Glastafel 2 gegen die Auflagefläche 1 gedrückt wird. Beim Anheben der Hebeleiste 7 (ggf. in Kombination mit einem Absenken der Widerlager 9 und 10) wird die Glastafel 2 entlang der Ritzlinie 5 gebrochen, ohne daß die Widerlager 9 und 10 physisch mit der Glastafel 2 bzw. der darauf angebrachten Beschichtung 3 in Berührung gelangen.

Wie in Fig. 1 gezeigt, ist die Wand 13 der Widerlager 9 und 10 so ausgebildet, daß sie schräg zur Auflagefläche 1 verläuft, wobei die dem Widerlager 10 benachbarte Kante 15 von der Auflagefläche 1 einen größeren Abstand aufweist als die andere Kante 16 der Widerlager 9 und 10. Zusätzlich ist die Unterseite der Wand 13 in Längsrichtung der Widerlager 9 und 10 konvex ausgebildet.

Die Widerlager 9 und 10 besitzen beispielsweise eine Breite von 10 cm und sind je nach Größe des Glasschneidetisches bis zu 3 m lang.

In Fig. 2 ist ein Brechtisch 20 gezeigt, in dem eine Brechstelle 21 für statisches Brechen und eine Brechstelle 22 für dynamisches Brechen von Glastafeln 2 mit Ritzungen 5 vorgesehen ist. Die Brechstelle 21 zum statischen Brechen ist, wie in Fig. 1 dargestellt, ausgeführt. Die durch Brechen entlang der Ritzungen 5 entstandenen Glasstreifen, die noch Ritzungen 23 aufweisen, werden durch in die Auflagefläche 1 absenkbare Transportbänder 24 in Richtung des Pfeiles 25 und in der Folge durch Transportbänder 26 in Richtung des Pfeiles 27 zur dynamischen Brechstelle 22 gefördert. Die dynamische Brechstelle 22 entspricht mit Ausnahme, daß an Stelle der Brechleiste 7 eine anhebbare Brechrolle 28 vorgesehen ist, die in Richtung der Pfeile 29 drehangetrieben ist, der statischen Brechstelle mit dem in Fig. 1 gezeigten Aufbau. In der dynamischen Brechstelle 22 können die Glasstreifen, die von der statischen Brechstelle 21 kommen, im Durchlaufverfahren entlang der Ritzungen 23 gebrochen werden.

Grundsätzlich ist anzumerken, daß eine statische Brechung von mit Ritzungen 5 versehenen Glastafeln 2 in erster Linie für dickere Scheiben und kleinere Abstände der Ritzungen 5 voneinander geeignet ist, wogegen eine dynamische Brechung in erster Linie für das Querbrechen (vgl. Fig. 2 und die zugehörige Beschreibung) geeignet ist, wobei bevorzugt dünnere Glasscheiben bzw. Glasscheiben, die größere Abstände der Ritzungen voneinander aufweisen, im dynamischen Brechverfahren gebrochen werden. Die Brechrolle 28 dient dabei nicht nur dazu die Glastafeln zum Brechen im Zusammenwirken mit den Widerlagern 9 und 10 zu biegen, sondern auch für den Transport der Glastafeln 2 durch die dynamische Brechstation 22.

An der dem Widerlager zugekehrten Seite des Widerlagers 9 der Brechstelle 22 können zusätzliche Düsen 30 angeordnet sein (Fig. 3), aus welchen Gas, insbesondere Luft, nach unten ausströmt. Durch diese Maßnahme wird verhindert, daß sich die vordere Kante der Glastafel zu weit von der Auflagefläche 1 abhebt und u.U. am Widerlager 9 anstößt. Die Düsen sind vorzugsweise höher angeordnet als die Düsen 14 des Widerlagers 9.

Es ist noch darauf hinzuweisen, daß der in Fig. 2 gezeigte Brechtisch nicht unbedingt gewinkelt ausgebildet sein muß, er kann auch gerade sein.

## Patentansprüche

1. Vorrichtung zum Brechen von einseitig geritzten Glastafeln (2), mit einer beispielsweise als Tisch ausgebildeten Auflagefläche (1) für die geritzte Glastafel (2), mit einem Paar von oben gegen die Glastafel (2) einwirkender Widerlager (9, 10), die zueinander im wesentlichen parallel ausgerichtet sind, und mit einer von unten zwischen den Widerlagern (9, 10) gegen die Glastafel (2) anlegbaren Hebeleiste (7) oder -rolle (28), dadurch gekennzeichnet, daß die Widerlager (9, 10) wie an sich bekannt hohl ausgebildet sind, an ihrer der Glastafel (2) zugekehrten Unterseite (13) Austrittsöffnungen (14) für ein gasförmiges Medium aufweisen, und an wenigstens eine Quelle für das unter Druck gesetzte gasförmige Medium, insbesondere Luft, angeschlossen sind, daß die der Auflagefläche (1) bzw. der Glastafel zugewandte Unterseite (13) der Widerlager (9, 10) schräg ausgebildet ist, wobei die der Hebeleiste (7) oder -rolle (28) benachbarten unteren Kanten (15) der Widerlager (9, 10) höher angeordnet sind als die anderen unteren Kanten (16) derselben.

2. Vorrichtung nach Anspruch 1, dadurch gekennzeichnet, daß die Austrittsöffnungen (14) für das gasförmige Medium als Schlitzdüsen oder als eine durchgehende Schlitzdüse ausgebildet sind.

3. Vorrichtung nach Anspruch 2, dadurch gekennzeichnet, daß nebeneinander mehrere, sich in Längsrichtung der Widerlager (9, 10) erstreckende Reihen von Schlitzdüsen bzw. mehrere nebeneinander angeordnete, durchgehende Schlitzdüsen vorgesehen sind.

4. Vorrichtung nach Anspruch 1, dadurch gekennzeichnet, daß die der Auflagefläche (1) bzw. der Glastafel (2) zugewandte Unterseite (13) der Widerlager (9, 10) quer zu deren Längserstrekkung konvex gekrümmt ausgebildet ist.

5. Vorrichtung nach einem der Ansprüche 1 bis 4, dadurch gekennzeichnet, daß der Abstand der Widerlager (9,10) voneinander symmetrisch zur Hebeleiste (7) oder -rolle (28) veränderbar (Pfeile 11) ist.

6. Vorrichtung nach einem der Ansprüche 1 bis 5, dadurch gekennzeichnet, daß zur Ausführung eines dynamischen Brechvorganges eine an sich bekannte Heberolle (28), die drehangetrieben ist, vorgesehen ist.

7. Vorrichtung nach Anspruch 6, dadurch gekennzeichnet, daß am, bezogen auf die Förderrichtung (Pfeil 27), zweiten Widerlager (9) auf dessen der Heberolle (28) zugekehrten Seitenwand Düsen (30) mit gegen die Auflagefläche (1) gerichteten Düsenöffnungen vorgesehen sind.

8. Vorrichtung nach Anspruch 7, dadurch gekennzeichnet, daß die Düsen (30) im Abstand über der Unterseite (13) des Widerlagers (9) angeordnet sind.

## Claims

1. Device for breaking glass plates (2), which have been cut on one side, with a support surface (1) constructed in the form of a table, for example, for the cut glass plate (2), with a pair of abutments (9, 10) acting against the glass plate (2) from above and aligned essentially parallel to one another, and with a lifting bar (7) or roller (28), which may be laid against the glass plate (2) from below between the abutments (9, 10), characterised in that the abutments (9, 10) are of hollow construction known per se, are provided on their underside (13) facing the glass plate (2) with outlets (14) for a gaseous medium, and are connected to at least one source for the pressurised gaseous medium, in particular air; that the underside (13) of the abutments (9, 10) facing the support surface (1) or the glass plate (2) is of sloping construction, in which case the lower edges (15) of the abutments (9, 10) adjacent to the lifting bar (7) or roller (28) are disposed at a higher level than the other lower edges (16) thereof.

2. Device according to Claim 1, characterised in that the outlets (14) for the gaseous medium are constructed in the form of slot nozzles or of a continuous slot nozzle.

3. Device according to claim 2, characterised in that several adjacent rows of slot nozzles extending in the longitudinal direction of the abutments (9, 10) or several adjacent continuous slot nozzles are provided.

4. Device according to Claim 1, characterised in that the underside (13) of the abutments (9, 10) facing the support surface (1) or the glass plate (2) has a convex curvature across its longitudinal extension.

5. Device according to one of Claims 1 to 4, characterised in that the distance between the abutments (9, 10) may be changed (arrows 11) symmetrically to the lifting bar (7) or roller (28).

6. Device according to one of Claims 1 to 5, characterised in that a rotary driven roller (28) known per se is provided to carry out a dynamic breaking process.

7. Device according to Claim 6, characterised in that nozzles (30) with openings directed against the support surface (1) are provided on the side wall of the second abutment (9) - viewed in transport direction (arrow 27) - facing the roller (28).

8. Device according to claim 7, characterised in that the nozzles (30) are spaced over the underside (13) of the abutment (9).

## Revendications

1. Dispositif pour casser des feuilles de verte (2) rayées sur une face, comportant une surface de pose (1) agencée par exemple sous la forme d'une table recevant la feuille de verte (2) rayée, une paire de contre-appuis (9, 10) qui agissent par le dessus sur la feuille de verte (2) et sont disposés sensiblement parallèlement l'un à l'autre, une règle (7) ou un rouleax (28) de soulèvement qui est appliqué par le dessous contre la feuille de verte (2), entre les contre-appuis (9, 10), caractérisé par le fait que les contre-appuis (9, 10) sont creux, comme cela est connu en soi, présentent sur leur face inférieure (13) tournée vers la feuille de verte (2) des orifices de sortie (14) pour un milieu gazeux et sont connectés à au moins une source pour le milieu gazeux sous pression, en particulier pour de l'air, par le fait que la face inférieure (13) des contre-appuis (9, 10) tournée vers la surface de pose (1) ou la feuille de verte est inclinée, les bords inférieurs (15) des contre-appuis (9, 10) voisins de la règle (7) ou du rouleau (28) de soulèvement étant disposés plus haut que les autres bords inférieurs (16) de ladite règle ou dudit rouleau.

2. Dispositif selon la revendication 1, caractérisé par le fait que les orifices de sortie (14) pour le milieu gazeux sont agencés sous la forme de buses individuelles à fente ou sous la forme d'une buse continue à fente.

3. Dispositif selon la revendication 2, caractérisé par le fait qu'il est prévu plusieurs rangées de buses à fente disposées côte à côte dans la direction longitudinale des contre-appuis (9, 10) ou plusieurs buses continues à fente disposées côte à côte.

4. Dispositif selon la revendication 1, caractérisé par le fait que la face inférieure (13) des contre-appuis (9, 10) tournée vers la surface de pose (1) ou la feuille de verte (2) présente une courbure convexe transversalement à la longueur desdits contre-appuis.

5. Dispositif selon l'une des revendications 1 à 4, caractérisé par le fait que la distance entre les contre-appuis (9, 10) peut être modifiée de manière symétrique par rapport à la règle (7) ou au rouleau (28) de soulèvement (flèches 11).

6. Dispositif selon l'une des revendications 1 à 5, caractérisé par le fait qu'il est prévu pour exécuter une opération de rupture dynamique un rouleau (28) de soulèvement connu en soi qui est entraîné en rotation.

7. Dispositif selon la revendication 6, caractérisé par le fait qu'il est prévu sur le deuxième contre-appui (9), rapporté à la direction de transport (flèche 27), sur la paroi latérale de celui-ci tournée vers le rouleau de soulèvement (28), des buses (30) dont les orifices sont tournés vers la surface de pose (1).

8. Dispositif selon la revendication 7, caractérisé par le fait que les buses (30) sont disposées à distance au-dessus de la face inférieure (13) du contre-appui (9).
